# EUROPEAN PATENT APPLICATION

(11) **EP 4 039 395 A1**
(43) Date of publication of application: **10.08.2022**
(21) Application number: 20871784.3
(22) Date of filing: 24.09.2020
(51) Int. Cl.: B23K 3/02

(54) **IRON TIP CLEANING DEVICE FOR SOLDERING IRON**

(30) Priority: 01.10.2019 JP 2019181649
(71) Applicant: Shoritsu Electric Industry Co., Ltd., Kawasaki City, Kangawa 212-0025 (JP)
(72) Inventor: NAKAJIMA, Kosuke, Mishima City, Shizuoka 4110042 (JP); YAMAMOTO, Shinobu, Mishima City, Shizuoka 4110042 (JP); MIMURA, Takeshi, Mishima City, Shizuoka 4110042 (JP)
(74) Representative: TBK
(86) International application number: PCT/JP2020/036095
(87) International publication number: WO 2021/065683

(57) **Abstract**

An object is to provide an iron tip cleaner device capable of smoothly discharging air blown against an iron tip. The object is solved by an iron tip cleaner device including: a cleaner portion that strips off a solder residue adhered to an iron tip of a soldering iron through jetting of air; an air supply portion that supplies, to the cleaner portion, the air to be jetted; and an air exhaust portion that exhausts the air jetted to the soldering iron. The air exhaust portion includes a first opening that is an opening through which the air jetted to the soldering iron is discharged and a second opening that is an opening of a pipe starting from an air supply port, a flow of air jetted from the second opening promotes the discharge of the air from the first opening, and air supplied to the air supply portion which supplies, to the cleaner portion, the air to be jetted and the air jetted from the second opening are supplied from one common air supply port.

## Description

### [Technical Field]

The present invention relates to an iron tip cleaner device that removes a solder residue adhered to an iron tip of a soldering iron by blowing air against the iron tip. More specifically, the present invention relates to an iron tip cleaner device from which blown air is smoothly discharged.

### [Background Art]

In an iron tip cleaner device that removes a solder residue adhered to an iron tip of a soldering iron by blowing air against the iron tip, it is necessary to smoothly discharge the air blown against the iron tip. In a case in which no air discharge means is provided, air with a solder residue mixed therein is jetted from an iron tip insertion port when the iron tip is pulled out of the cleaner device once the removal of a solder residue ends and the jetting is stopped. This is because the iron tip insertion port has necessarily to serve as an outlet port of the air.

Patent Literature 1 describes an iron tip cleaner device that removes a solder residue adhered to an iron tip of a soldering iron by blowing air against the iron tip and that is provided with an outlet port of the air. Here, it is described in [0023] of the specification of Patent Literature 1 that only one air source can be provided to be shared as a first air source and as a second air source. However, this description does not mean that only one supply air system is sufficient, which is one of features of the invention of the present application. Here is an explanation to this point. In the iron tip cleaner device described in Patent Literature 1, the first air source provides air to be used to clean the iron tip while the second air source provides air to be used to discharge the air. In addition, a selector valve for supplying air is provided for each of the first air source and the second air source. Since the first air source and the second air source use different pressures, it is necessary to provide the selector valve for each air source, and two air sources and two selector valves are thus provided. For the sharing of the first air source and the second air source described in [0023] of the specification of Patent Literature 1, it is described that air can be branched into two parts outside the device and allocated and input to the first air source and the second air source. In addition, since the iron tip cleaner device described in Patent Literature 1 includes the two air sources and selector valves provided in the air sources, the structure is complicated, which is also different from the invention of the present application.

### [Citation List]

### [Patent Literature]

[Patent Literature 1] Japanese Patent Laid-Open No. 2004-276081

### [Summary of Invention]

### [Technical Problem]

An object is to provide an iron tip cleaner device that removes a solder residue adhered to an iron tip of a soldering iron by blowing air against the iron tip, which is a device with a simple structure to enable smooth discharge of the air blown against the iron tip and supply of such air from one supply source. Further, an object is to provide a device that can be easily manufactured at low costs due to its simple structure.

### [Solution to Problem]

(1) The object is achieved by an iron tip cleaner device for a soldering iron including: an iron tip receiving portion that receives an iron tip of a soldering iron inserted therein; a cleaner portion that strips off a solder residue adhered to the iron tip of the soldering iron through jetting of air; an air supply portion that supplies, to the cleaner portion, the air to be jetted; an air exhaust portion that exhausts the air jetted to the soldering iron; and a housing inside which the air jetted to the soldering iron flows toward the air exhaust portion, in which the air exhaust portion includes a first opening that is an opening through which the air jetted to the soldering iron is discharged, and a second opening that is an opening of a pipe starting from an air supply port, a flow of air jetted from the second opening promotes the discharge of the air from the first opening, and air to be supplied to the air supply portion which supplies, to the cleaner portion, the air to be jetted and the air to be jetted from the second opening are supplied from one common air supply port.
(2) The object is achieved by the iron tip cleaner device for a soldering iron characterized in that the first opening is disposed at a position at which the first opening surrounds the second opening.
(3) The object is achieved by the iron tip cleaner device for a soldering iron characterized by including: a mechanism configured such that a ring-shaped copper wire is disposed in an insertion portion of the iron tip, a change in electrostatic capacity caused by the iron tip having approached the ring-shaped copper wire is detected, and the mechanism is triggered by the detection and starts to jet air.
(4) The object is achieved by the iron tip cleaner device for a soldering iron characterized in that the iron tip receiving portion is opened in a direction inclined from a vertical direction such that the iron tip receiving portion comes into sight of an operator who cleans the iron tip.
(5) The object is achieved by the iron tip cleaner device for a soldering iron characterized in that the iron tip receiving portion is opened in a vertical direction so as to receive the iron tip lowered in the vertical direction.

### [Advantageous Effect of Invention]

It is possible to obtain an iron tip cleaner device that removes a solder residue adhered to an iron tip of a soldering iron by blowing air against the iron tip, which is a device with a simple structure to enable smooth discharge of the air blown against the iron tip and supply of such air from one supply source. Further, it is possible to obtain a device that can be easily manufactured at low costs due to its simple structure.

### [Brief Description of Drawings]

[Figure 1] Figure 1 (1) illustrates a first embodiment of the present application, and (2) illustrates a third embodiment of the present application.
[Figure 2] Figure 2 illustrates the first embodiment of the present application.
[Figure 3] Figure 3 illustrates the first embodiment of the present application.
[Figure 4] Figure 4 illustrates the first embodiment of the present application.
[Figure 5] Figure 5 illustrates the first embodiment of the present application.
[Figure 6] Figure 6 illustrates a second embodiment of the present application.

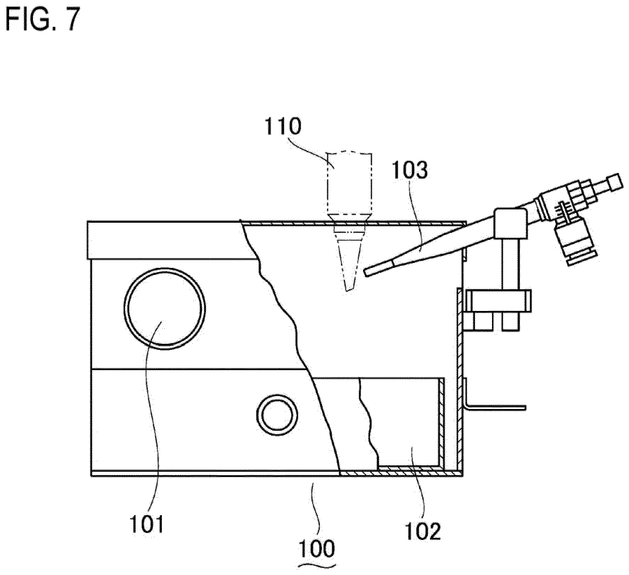

[Figure 7] Figure 7 illustrates a conventional example.

### [Description of Embodiments]

### [Overview of All Embodiments of the Invention of the Present Application]

A first embodiment is an example in which an iron tip is inserted into a cleaner device from an obliquely upper side and mainly assumes to be employed in a case in which soldering is performed by a manual operation. A second embodiment is an example in which an iron tip is inserted into a cleaner device from a side right above the cleaner device and mainly assumes to be employed in a case in which soldering is performed by a robot. A third embodiment is an example related to a mechanism that detects whether or not an iron tip has been inserted into an iron insertion port of a cleaner device, which is another example of a mechanism described in the first embodiment and can be applied to both the cleaner devices in the first embodiment and the second embodiment. Hereinafter, each of the embodiments will be described separately.

### [First Embodiment]

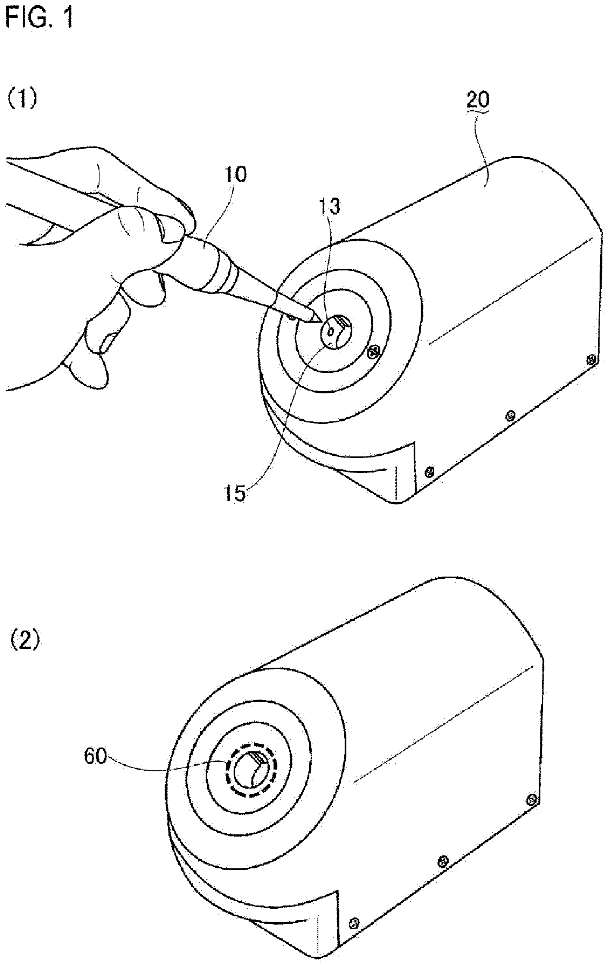

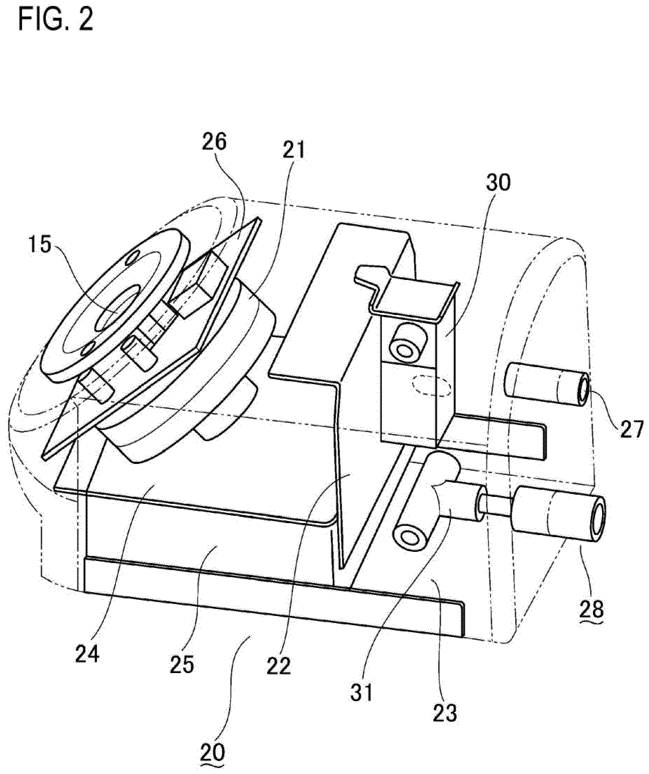

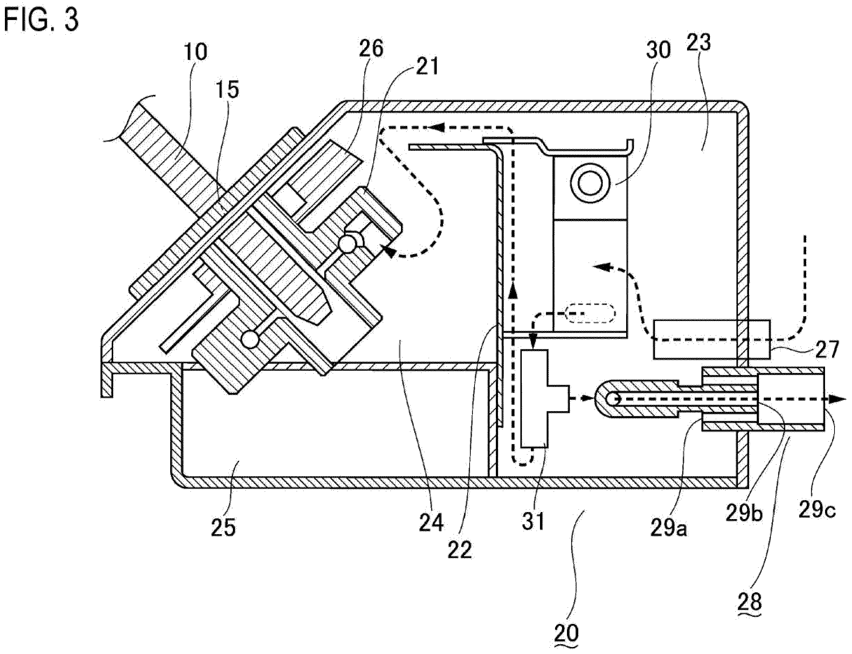

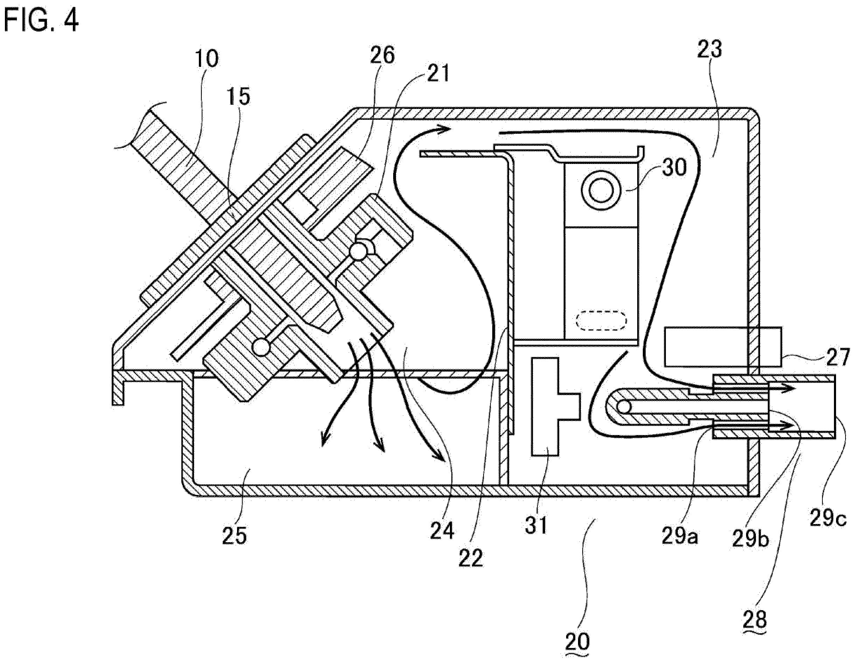

The first embodiment will be described with reference to Figures 1(1), 2, 3, 4, and 5. Figure 1(1) is a diagram of a state in which an iron tip cleaner 20 is used when seen from the outside. Figure 2 illustrates an overview of positions of members that configure a cleaner device. Although the members that configure the cleaner device are connected to each other at various portions with pipes through which air flows, the pipes are omitted in all Figures 2, 3, and 4 for easy description. In Figure 3, air flowing through the pipes is illustrated by the arrows of dashed lines. In Figure 4, air flowing in spaces in the cleaner device is illustrated by the arrows of solid lines.

As illustrated in Figure 1(1), the iron tip cleaner 20 includes an iron tip insertion port 15 in a front surface. When an iron tip is cleaned, an iron tip of a soldering iron 10 is inserted into an iron tip insertion port 15 of the iron tip cleaner 20.

As illustrated in Figure 2, the iron tip insertion port 15 is connected to a cleaning pot 21 via a control board 26. The cleaning pot 21 has a configuration as described in Japanese Patent Application No. 2019-45579, for example. In other words, the cleaning pot 21 includes, for example, a cleaner chamber therein, and the iron tip inserted from the iron tip insertion port enters the cleaner chamber. A solder residue at the iron tip is blown away by air jetted from a jetting port included in a wall surface of the cleaner chamber. A scrap receptacle 25 that receives the solder residue striping off, blown away, and dropping from the iron tip is provided below the cleaning pot 21. The scrap receptacle 25 is of a drawer type and can be pulled out toward the outside (front side, for example) to discard a stored solder residue.

The iron tip cleaner 20 includes therein a partitioning plate 22 that partitions a housing of the iron tip cleaner. The inside of the iron tip cleaner is divided by the partitioning plate 22 into a front chamber 24 on the front side of the partitioning plate and a back chamber 23 on the back side of the partitioning plate. The partitioning plate 22 does not completely split the inside of the iron tip cleaner 20 and includes voids that are sufficient for air to smoothly flow into the back chamber 23, on the upper side and lateral sides between the partitioning plate 22 and the housing. This is because a mechanism for discharging air to the outside is provided in the back chamber 23 as will be described later, and if the air does not smoothly flow into the back chamber 23, the discharge of the air to the outside is prevented.

The back chamber 23 includes an air supply port 27 for supplying air to the iron tip cleaner, a solenoid valve 30 that controls opening and closing of a pipe through which the supplied air flows, a joint 31 that splits a flowing direction in the pipe into two directions, and an exhaust port 28 that discharges air to the outside.

Operations of the cleaner device according to the first embodiment will be described with reference to Figures 3, 4, and 5.

As described above, illustration of the pipes that connect the members is omitted in Figures 3, 4, and 5. In Figure 3, flows of air flowing in the pipes are illustrated by the arrows of dashed lines. In other words, air that has entered the inside of the cleaner device 20 from the air supply port 27 flows with a large pressure in order of the air supply port 27, a pipe, the solenoid valve 30, a pipe, the joint 31, a pipe, and the cleaning pot 21 and is jetted to the iron tip of the soldering iron in the cleaning pot 21.

An existing transmissive sensor is provided at the position illustrated with the reference sign 13 (Figure 1(1)) near the soldering iron insertion port. If the iron tip of the soldering iron 10 is inserted into the soldering iron insertion port 15, then the transmissive sensor detects that the iron tip has been inserted, and an air blowing switch is turned on to start to blow air. In other words, if the transmissive sensor detects the insertion of the soldering iron, then the air is supplied with a strong flow from the air supply port 27 toward the cleaning pot 21. In the cleaning pot 21, the air is jetted from the jetting port included in the wall surface of the cleaner chamber therein and blows away a solder residue from the iron tip.

Figure 4 illustrates, with the arrows of solid lines, flows of air related to air flowing through spaces inside the housing of the iron tip cleaner 20 where each member is not connected with a pipe.

The air flows while swirling in the cleaning pot 21 and is jetted toward the iron tip.

Air after finishing the cleaning of the iron tip of the soldering iron in the cleaning pot 21 flows toward the scrap receptacle 25 inside the housing of the iron tip cleaner 20 as illustrated by the arrows of the solid lines in Figure 4, and most of the solder residue drops to the scrap receptacle 25. The air avoids the partitioning plate 22 in the housing, flows on the upper side and the lateral sides of the housing, and then enters the back chamber 23. The air jetted from the cleaning pot 21 collides against the partitioning plate 22 and flows downward. Therefore, a solder residue mixed in the air is guided to the scrap receptacle 25 and does not fly and spread widely over the entire inside of the iron tip cleaner 20.

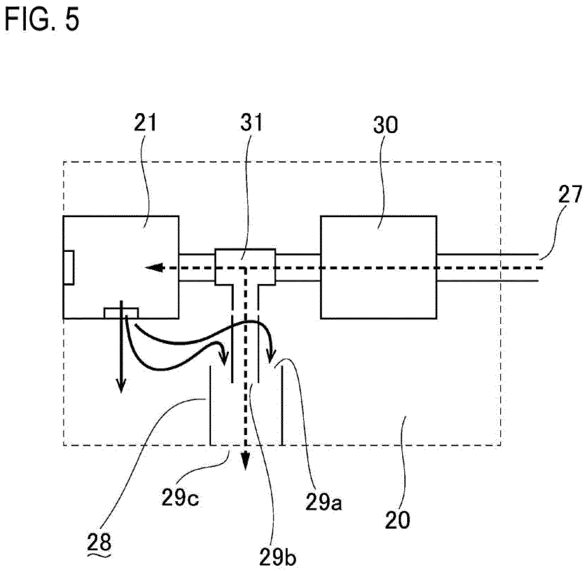

Using Figures 3 to 5, flows of air related mainly to the back chamber will be described. As illustrated by the arrows of dashed lines in Figure 5, the air that has entered the cleaner device 20 from the air supply port 27 flows to the joint 31 via the pipe and is branched into two directions, namely the direction to the cleaning pot 21 and the direction to (an inner outlet port 29b of) the exhaust port 28 at the joint 31.

As schematically illustrated in Figure 5, the exhaust port 28 includes the inner outlet port 29b of the exhaust port in addition to an assembled outlet port 29c of the exhaust port. In addition, the exhaust port 28 includes an outer inlet port 29a of the exhaust port that receives air from the space inside the housing. See Figures 3 and 4 for the outer inlet port 29a, the inner outlet port 29b, and the assembled outlet port 29c of the exhaust port.

Air that has flowed out of the inner outlet port 29b of the exhaust port then flows toward the assembled outlet port 29c of the exhaust port and is directly discharged. At this time, a flow of air is formed from the inner outlet port 29b toward the assembled outlet port 29c inside the exhaust port 28. The flow of the air formed here causes a flow of the air inside the housing of the iron tip cleaner 20 flowing from 29a toward the exhaust port 28. As a result, the air after finishing the cleaning of the iron tip of the soldering iron avoids the partitioning plate 22 in the housing of the iron tip cleaner 20 and flows above the housing and the like, and the air that has flowed into the back chamber 23 passes through the outer inlet port 29a of the exhaust port, enters the exhaust port, and is discharged from the assembled outlet port 29c of the exhaust port. Since the air that has flowed into the back chamber 23 originally seeks and flows to an outlet port in the housing of the iron tip cleaner, if even a slight air flow has been generated, the air is likely to flow out with the slight air flow.

### [Second Embodiment]

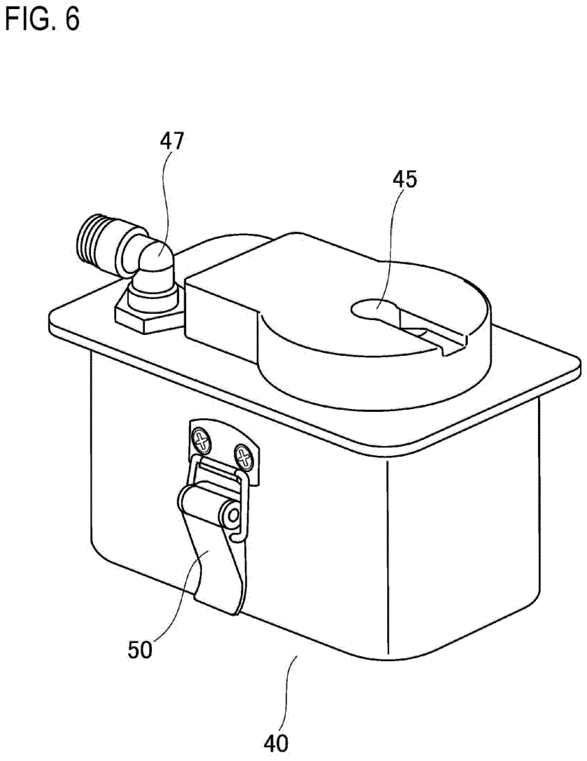

The second embodiment will be described with reference to Figure 6. In an iron tip cleaner 40, an iron tip insertion port 45 is opened toward the vertical direction in a top surface of the iron tip cleaner. In a case in which a soldering device is a robot, soldering is performed with an iron tip moved upward and downward in the vertical direction in many cases, and an operation of the soldering iron performed when a solder residue is cleaned is thus set to the up-down direction that is the same as the movement performed when soldering is performed. The other mechanisms are similar to those in the first embodiment and will thus be omitted.

### [Third Embodiment]

The third embodiment will be described with reference to Figure 1(2). In the third embodiment, a proximity sensor based on an electrostatic capacity scheme is used as a mechanism that detects that an iron tip of a soldering iron has been inserted into a soldering iron insertion port 15. Specifically, a copper wire is arranged in a round shape at a position surrounding the insertion port of the iron tip insertion port. Although the copper wire may be provided anywhere as long as the copper wire surrounds the iron tip insertion port in a round shape at the position, the copper wire is provided on the control board 26 in Figure 1(2). Since the ring-shaped copper wire provided on the control board is not seen from the outside, the ring-shaped copper wire 60 is illustrated by a dashed line at a position where the ring-shaped copper wire 60 is present in Figure 1(b). If the iron tip of the soldering iron approaches the iron tip insertion port, then a change in electrostatic capacity is sensed, an air blowing switch is turned on via an electric circuit (not illustrated) provided on the control board 26, and air blowing is started. Employing the electrostatic capacity scheme enables sensitivity adjustment related to whether to turn on the switch or whether to respond with no reaction. This allows for adjustment such that the air blowing switch is not turned on when something that is smaller than the iron tip, for example, a foreign matter adheres thereto while a reaction is made to something that is as large as the iron tip.

### [Reference Signs List]

10 Soldering iron
15 Iron tip insertion port
20 Iron tip cleaner
21 Cleaning pot
22 Partitioning plate
23 Back chamber
24 Front chamber
25 Scrap receptacle
26 Control board
27 Air supply port
28 Exhaust port
29a Outer inlet port of exhaust port
29b Inner outlet port of exhaust port
29c Assembled outlet port of exhaust port
30 Solenoid valve
31 Joint
40 Iron tip cleaner
45 Iron tip insertion port
47 Air supply port
50 Fastening tool
60 Ring-shaped copper wire
100 Iron tip cleaning device for soldering iron
101 Suction hose connection port
102 Tray
103 Air jetting nozzle
110 Soldering iron

## Claims

1. An iron tip cleaner device for a soldering iron comprising:
an iron tip receiving portion that receives an iron tip of a soldering iron inserted therein;
a cleaner portion that strips off a solder residue adhered to the iron tip of the soldering iron through jetting of air;
an air supply portion that supplies, to the cleaner portion, the air to be jetted;
an air exhaust portion that exhausts the air jetted to the soldering iron; and
a housing, the air jetted to the soldering iron flowing toward the air exhaust portion in an internal space of the housing,
wherein the air exhaust portion includes
a first opening that is an opening through which the air jetted to the soldering iron is discharged, and
a second opening that is an opening of a pipe starting from an air supply port,
a flow of air jetted from the second opening promotes the discharge of the air from the first opening, and
air to be supplied to the air supply portion which supplies, to the cleaner portion, the air to be jetted and the air to be jetted from the second opening are supplied from one common air supply port.

2. The iron tip cleaner device for a soldering iron according to claim 1, wherein the first opening is disposed at a position at which the first opening surrounds the second opening.

3. The iron tip cleaner device for a soldering iron according to claim 1 or 2, further comprising:
a mechanism configured such that a ring-shaped copper wire is disposed in an insertion portion of the iron tip, a change in electrostatic capacity caused by the iron tip having approached the ring-shaped copper wire is detected, and the mechanism is triggered by the detection and starts to jet air.

4. The iron tip cleaner device for a soldering iron according to any one of claims 1 to 3, wherein the iron tip receiving portion is opened in a direction inclined from a vertical direction such that the iron tip receiving portion comes into sight of an operator who cleans the iron tip.

5. The iron tip cleaner device for a soldering iron according to any one of claims 1 to 3, wherein the iron tip receiving portion is opened in a vertical direction so as to receive the iron tip lowered in the vertical direction.
